# FASCICULE DE BREVET EUROPEEN

(11) **EP 3 424 184 B1**
(45) Date de publication et mention de la délivrance du brevet: **09.10.2019**
(21) Numéro de dépôt: 17713723.9
(22) Date de dépôt: 28.02.2017
(51) Int. Cl.: H04L 12/28, H04W 12/04, H04L 9/08, H04L 29/06

(54) **PROCÉDÉ D'INITIALISATION ET DE SÉCURISATION DE COMMUNICATION BIDIRECTIONNELLE D'UN APPAREIL AVEC UN RÉSEAU DOMOTIQUE**
VERFAHREN ZUR INITIALISIERUNG UND SICHERUNG VON BIDIREKTIONALER KOMMUNIKATION EINES GERÄTES MIT EINEM HEIMAUTOMATIONSNETZWERK
METHOD FOR INITIALIZING AND SECURING BIDIRECTIONAL COMMUNICATION OF AN APPLIANCE WITH A HOME-AUTOMATION NETWORK

(30) Priorité: 01.03.2016 FR 1651704
(43) Date de publication de la demande: 09.01.2019
(73) Titulaire: HAGER-ELECTRO SAS, 67210 Obernai (FR)
(72) Inventeur: MARY, Pascal, 67230 HUTTENHEIM (FR); SCHWIEN, Frédéric, 68240 KIENTZHEIM (FR)
(74) Mandataire: Nuss, Laurent
(86) Numéro de dépôt international: PCT/FR2017/050445
(87) Numéro de publication internationale: WO 2017/149237

(56) Documents cités:
- KNX Association: "KNX Application Note 159/13 v04 - KNXnet/IP Secure", KNX Standard v2.1, 19 septembre 2013 (2013-09-19), XP055319492, Extrait de l'Internet: URL:https://www.knx.org [extrait le 2016-11-15]
- KNX Association: "KNX System Specifications - KNXnet/IP Core v01.05.01", KNX Standard v2.1, 28 octobre 2013 (2013-10-28), XP055319511, Extrait de l'Internet: URL:https://www.knx.org [extrait le 2016-11-15]
- KNX Association: "KNX System Specifications - Architecture v03.00.02", KNX Standard v2.1, 29 novembre 2013 (2013-11-29), XP055319574, Extrait de l'Internet: URL:https://www.knx.org [extrait le 2016-11-15]

## Description

La présente invention concerne le domaine des réseaux domotiques, plus particulièrement le domaine de l'initialisation et de la sécurisation des communications des réseaux domotiques.

Elle concerne un procédé d'initialisation et de sécurisation de communication bidirectionnelle d'au moins un premier appareil appartenant à un premier réseau avec une centrale domotique ou, par l'intermédiaire de ladite centrale domotique, avec au moins un deuxième appareil appartenant à un deuxième réseau, ledit deuxième réseau étant un réseau domotique.

Dans le présent document, un réseau ou réseau domotique désigne un ensemble d'équipements reliés entre eux pour échanger des données.

En outre dans le présent document, un appareil ou appareil connecté ou objet connecté désigne tout type d'appareil connecté à Internet, par exemple, tel qu'un téléviseur ou une station météo.

Dans le domaine des réseaux domotiques, il est devenu nécessaire de garantir la sécurisation des données échangées entre un appareil connecté, ou objet connecté, et un réseau domotique.

En effet, le développement des objets connectés et leur utilisation avec un réseau domotique ne permettent plus de garantir une fiabilité des données échangées entre un appareil connecté et un réseau domotique.

Il est devenu apparent que les réseaux domotiques sont potentiellement vulnérables, par l'intermédiaire de ces appareils connectés, à des intrusions extérieures non désirées.

Des standards de communication ont été développés afin de renforcer la sécurité des réseaux domotiques. Ces standards de communication ont généralement pour objectifs d'identifier un nouvel appareil connecté à un réseau domotique et/ou encore de sécuriser les communications entre l'appareil connecté et le réseau domotique.

Toutefois, de façon générale ces standards de communication nécessitent d'identifier automatiquement un objet connecté lorsqu'il est relié à un réseau domotique et consistent principalement à enregistrer, à partir du réseau domotique, une clé de partage sécurisée dans la mémoire de l'objet connecté à relier audit réseau, ceci de sorte à pourvoir l'identifier et autoriser une communication sécurisée avec le réseau domotique.

Cette identification permet d'autoriser l'objet connecté à communiquer avec un appareil appartenant au réseau domotique.

De plus, ces standards de communication ne garantissent ni l'origine d'un appareil, ni le contenu des données d'un appareil relié à un réseau domotique. En effet, des vulnérabilités pourraient être contenues dans l'architecture logicielle ou applicative de ces appareils connectés.

La publication KNX Association, "KNX Application Note 159/13 v04 - KNXnet/IP Secure", KNX Standard v2.1, (20130919), URL: https://www.knx.org, (20161115), XP055319492 décrit déjà un tel standard de communication conforme au préambule de la revendication 1.

La présente invention a pour but de pallier à au moins l'un de ces inconvénients en proposant un procédé d'initialisation et de sécurisation de communication bidirectionnelle d'un appareil avec un réseau domotique qui permet d'éviter d'identifier automatiquement l'appareil lorsqu'il est relié au réseau domotique tout en garantissant l'origine de l'appareil et en assurant une communication sécurisée.

L'invention a ainsi pour objet un procédé d'initialisation et de sécurisation de communication bidirectionnelle d'au moins un premier appareil selon la revendication 1.

L'invention porte également sur une centrale domotique pour la mise en oeuvre du procédé, ladite centrale domotique étant configurée pour réaliser une communication bidirectionnelle d'au moins un premier appareil appartenant à un premier réseau avec une centrale domotique et/ou, par l'intermédiaire de ladite centrale domotique, avec au moins un deuxième appareil appartenant à un deuxième réseau, ledit deuxième réseau étant un réseau domotique,
caractérisée en ce qu'elle comprend :
- un moyen de contrôle apte à réaliser les étapes de détection, de vérification, de réception, d'établissement, d'autorisations,
- un moyen de commande apte à réaliser l'étape de découverte,
- un système de connexion apte à relier ledit premier appareil à ladite centrale domotique.

L'invention sera mieux comprise, grâce à la description ci-après, qui se rapporte à un mode de réalisation particulier, donné à titre d'exemple non limitatif, et expliqué avec référence aux dessins schématiques annexés, dans lesquels :
- la figure 1 est une représentation d'un schéma de communication d'établissement lors d'un fonctionnement avec une base de données à distance sécurisée,
- la figure 2 est une représentation d'un schéma de communication d'établissement lors d'un fonctionnement avec une base de données locale sécurisée.

La présente invention porte sur un procédé d'initialisation et de sécurisation de communication bidirectionnelle d'au moins un premier appareil 1 appartenant à un premier réseau 1' avec une centrale domotique 3 ou, par l'intermédiaire de ladite centrale domotique 3, avec au moins un deuxième appareil 2 appartenant à un deuxième réseau 2', ledit deuxième réseau 2' étant un réseau domotique, ladite centrale domotique 3 étant reliée, d'une part audit premier réseau 1', et d'autre part audit deuxième réseau 2', ladite centrale domotique 3 étant configurée pour, initialement, ignorer les communications provenant et/ou à destination dudit au moins un premier appareil 1 dudit premier réseau 1',
procédé caractérisé en ce qu'il comprend :
- une étape de découverte (a) par ladite centrale domotique 3 dudit au moins un premier appareil 1 dudit premier réseau 1', cette étape étant réalisée à l'aide d'un moyen de commande de ladite centrale domotique 3 ;
- une étape de détection (b) automatique dudit au moins un premier appareil 1, cette étape étant réalisée à partir de ladite centrale domotique 3 ;
- une étape de vérification (c) automatique pour déterminer si ledit premier appareil 1 émet à travers ledit premier réseau 1' une clé de chiffrement publique à laquelle est associée une clé de chiffrement privée, cette étape étant réalisée à partir de ladite centrale domotique 3.

Grâce à l'étape de découverte (a), il est possible d'éviter une identification automatique dudit au moins un premier appareil 1. En effet, dans cette étape la découverte d'un premier appareil 1 est toujours réalisée à partir d'un moyen de commande de ladite centrale domotique 3. De cette façon, l'identification par la centrale domotique 3 d'un premier appareil 1 est toujours assurée par l'intervention d'un utilisateur qui actionne manuellement le moyen de commande.

De cette façon, il est alors possible de restreindre l'identification, par le réseau domotique 2', d'un ou de plusieurs premier(s) appareil(s) 1 à la seule volonté de l'utilisateur.

En outre, l'étape de vérification (c) permet de vérifier, lorsqu'un premier appareil 1 est relié pour la première fois au réseau domotique 2', si ce premier appareil 1 dispose bien d'une clé de chiffrement publique reconnue par la centrale domotique 3 et préalablement enregistrée dans un moyen mémoire de cet appareil 1. Ladite clé de chiffrement public étant associée à une clé de chiffrement privée.

Généralement, l'enregistrement de la clé de chiffrement publique dans la mémoire d'un premier appareil 1 est réalisé lors du cycle de fabrication du premier appareil 1, c'est-à-dire avant que le premier appareil 1 ne soit à la disposition d'un utilisateur. A titre d'exemple cette clé de chiffrement publique est préalablement enregistrée en usine dans la mémoire d'un tel premier appareil 1.

De cette façon, grâce à l'étape de vérification (c), il est alors possible de garantir l'origine du premier appareil 1, c'est-à-dire sa provenance.

En effet, une fois les étapes de découverte (a) et de détection (b) réalisées et si une clé de chiffrement publique est reçue par la centrale domotique 3, il est alors possible de déterminer si cette clé de chiffrement publique, à laquelle est associée une clé de chiffrement privée, est reconnue par la centrale domotique 3.

Ainsi, si ladite clé de chiffrement publique est reconnue par la centrale domotique 3, il est alors possible d'identifier ce même premier appareil 1 comme étant autorisé à communiquer avec la centrale domotique 3 ou, par l'intermédiaire de la centrale domotique 3, avec un autre appareil 2 du réseau domotique, la communication bidirectionnelle entre ces appareils 1, 2 étant réalisés par l'intermédiaire de la centrale domotique 3.

De façon avantageuse, les étapes de découverte (a), de détection (b) et de vérification (c) sont réalisées successivement.

De façon préférée, ladite clé de chiffrement publique, à laquelle est associée une clé de chiffrement privée, peut être une clé de type Public Key Infrastructure (PKI).

De façon encore plus préférée, ladite clé de chiffrement publique et ladite clé de chiffrement privée peuvent être générées en utilisant le principe de l'échange de clé de Diffie-Hellman.

Selon un premier mode particulier de l'invention, le procédé comprend en outre, à la suite de l'étape de vérification (c) et dans le cas où ledit premier appareil 1 émet à travers ledit premier réseau 1' ladite clé de chiffrement publique :
- une étape de réception (d) de ladite clé de chiffrement publique provenant du au moins premier appareil 1.

Selon un premier mode particulier de l'étape de découverte (a), cette étape est réalisée en appuyant manuellement sur un moyen de commande mécanique de ladite centrale domotique 3, par exemple un bouton poussoir. De cette façon l'utilisateur dispose d'un moyen physique simple et efficace pour initier la découverte de premiers appareils 1 appartenant au premier réseau 1'.

Selon un deuxième mode particulier de l'étape de découverte (a), cette étape est réalisée en générant manuellement une requête à partir d'une interface informatique d'utilisation et de gestion de ladite centrale domotique 3. De cette façon l'utilisateur dispose d'un moyen logiciel simple et efficace pour initier la découverte de premiers appareils 1 appartenant au premier réseau 1'.

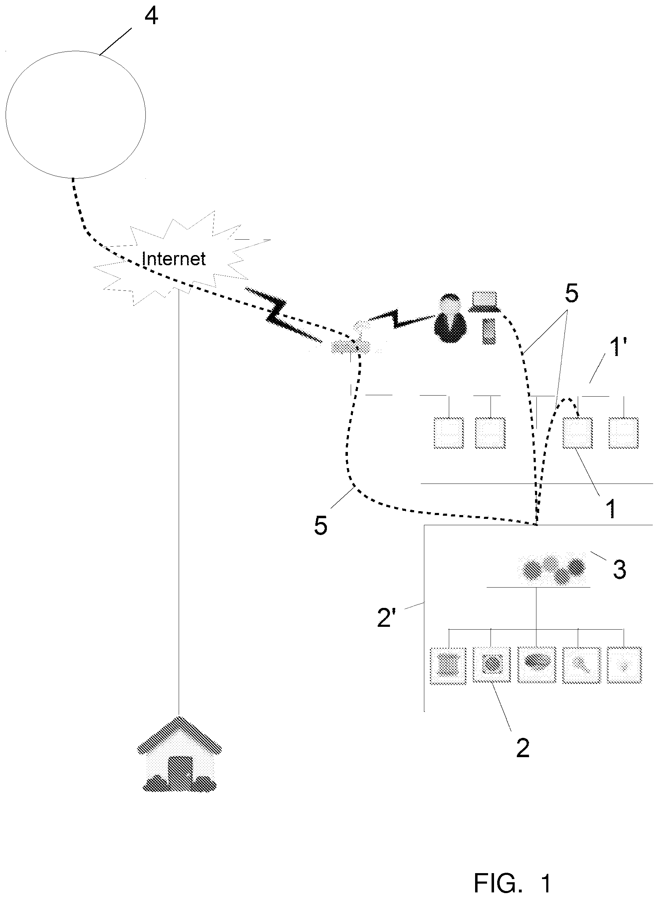

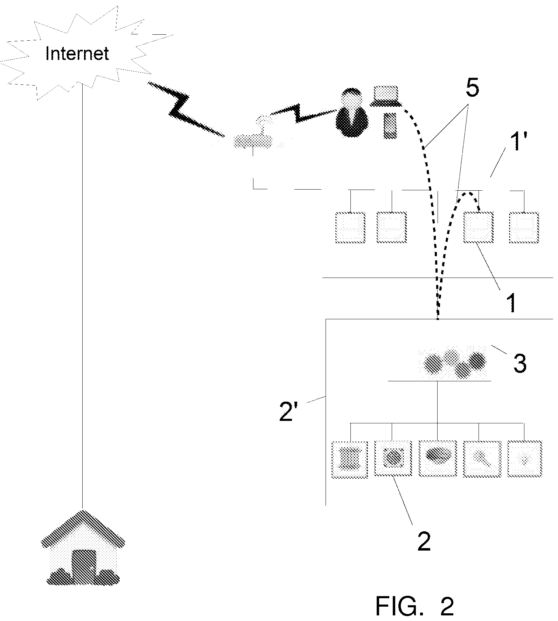

Selon un deuxième mode particulier de l'invention, le procédé comprend en outre, à la suite de l'étape de réception (d) :
- une étape d'établissement (e) d'un lien de communication entre ladite centrale domotique 3 et une base de données à distance sécurisée (figure 1) ou une base de données locale sécurisée (figure 2) puis d'envoi d'une requête contenant ladite clé de chiffrement publique à ladite base de données à distance sécurisée (figure 1) ou ladite base de données locale sécurisée (figure 2), cette étape est réalisée à partir de ladite centrale domotique 3 en vue de déterminer si ladite clé de chiffrement privée est comprise dans ladite base de données à distance sécurisée (figure 1) ou dans ladite base de données locale sécurisée (figure 2), ladite centrale domotique 3 comprenant en outre un premier moyen de mémoire.

De préférence, ladite base de données à distance sécurisée (figure 1) peut être contenue dans un serveur de données à distance 4.

Selon une variante du deuxième mode particulier de l'invention, ladite base de données locale sécurisée (figure 2) est stockée dans un deuxième moyen de mémoire de ladite centrale domotique 3.

Préférentiellement, ladite base de données à distance (figure 1) sécurisée ou ladite base de données locale sécurisée (figure 2) permet de gérer au moins une clé de chiffrement asymétrique logicielle associée à un certificat numérique, de préférence ledit certificat numérique peut être de type X 509.

Encore plus préférentiellement, ladite base de données locale sécurisée (figure 2) peut être protégée à l'aide d'un chiffrement géré par une bibliothèque logicielle exécutée depuis la centrale domotique 3.

De façon particulière, ladite base de données à distance (figure 1) sécurisée ou ladite base de données locale sécurisée (figure 2) peut être protégée à l'aide d'un composant électronique dédié assurant un chiffrement de son contenu.

En pratique, la centrale domotique 3 peut être configurée pour utiliser uniquement la base de données à distance sécurisée (figure 1). Toutefois, lorsqu'un accès Internet n'est pas possible, il est possible de configurer la centrale domotique 3 pour utiliser uniquement la base de données locale sécurisée (figure 2). Alternativement, la base de données locale sécurisée (figure 2) peut être mise à jour par rapport au contenu de la base de données à distance (figure1) sécurisée.

La base de données à distance sécurisée (figure 1) peut utiliser des services Web de type Extensible Markup Language (XML) et/ou Javascript Object notation (JSON).

De façon préférée, les communications sécurisées dudit premier appareil 1 avec ladite centrale domotique 3 ou, par l'intermédiaire de ladite centrale domotique 3, avec ledit deuxième appareil 2 peuvent être réalisées à l'aide d'un protocole de type HyperText Transfer Protocol Secure (HTTPS), préférentiellement une couche de chiffrement de type Transport Layer Security (TLS) peut être utilisée.

De façon encore plus avantageuse, les communications sécurisées dudit premier appareil 1 avec ladite centrale domotique 3 ou, par l'intermédiaire de ladite centrale domotique 3, avec ledit deuxième appareil 2 peuvent être réalisées à l'aide d'un protocole de type HyperText Transfer Protocol (HTTP), à l'aide d'un standard de communication de type RFC 7519 et à l'aide d'un standard de communication de type RFC 7515.

De façon particulièrement avantageuse, les communications sécurisées dudit premier appareil 1 avec ladite centrale domotique 3 ou, par l'intermédiaire de ladite centrale domotique 3, avec ledit deuxième appareil 2 peuvent être réalisées à l'aide d'un protocole de type Constrained Application Protocol (CoAP), à l'aide d'un standard de communication de type RFC 7519 et à l'aide d'un standard de communication de type RFC 7515.

Selon une variante de l'étape de détection (b), ledit premier appareil 1 peut être détecté par la centrale domotique 3 à l'aide d'une adresse de type Media Access Control (MAC) dudit premier appareil 1.

Selon un troisième mode particulier de l'invention, le procédé comprend en outre, à la suite de l'étape d'établissement (e) :
- une étape d'enregistrement (f) automatique d'une information uniquement lorsque ladite clé de chiffrement privée est contenue dans ladite base de données à distance sécurisée (figure 1) ou dans ladite base de données locale sécurisée (figure 2), ladite information désignant ledit premier appareil 1 comme comprenant ladite clé de chiffrement publique à laquelle est associée ladite clé de chiffrement privée, ladite information désignant ladite clé de chiffrement privée comme étant contenue dans ladite base de données à distance sécurisée (figure 1) ou dans ladite base de données locale sécurisée (figure 2), ladite information désignant en outre ledit premier appareil 1 comme étant autorisé à communiquer avec ladite centrale domotique 3 ou, par l'intermédiaire de ladite centrale domotique 3, avec ledit au moins un deuxième appareil 2 dudit réseau domotique 2' par le biais d'une communication sécurisée 5, cette étape est réalisée à l'aide dudit premier moyen de mémoire.

Selon une variante du troisième mode particulier de l'invention, ladite information peut être associée à un certificat numérique, préférentiellement un certificat numérique de type X 509.

Selon une autre variante du troisième mode particulier de l'invention, ladite information peut être associée à une adresse de type Media Access Control (MAC) dudit premier appareil 1.

Selon un quatrième mode particulier de l'invention, le procédé comprend en outre, à la suite de l'étape d'établissement (e) :
- une étape d'enregistrement (f') d'une information uniquement lorsque ladite clé de chiffrement privée n'est pas contenue dans ladite base de données à distance sécurisée (figure 1) ou dans ladite base de données locale sécurisée (figure 2) et qu'un utilisateur confirme manuellement la fiabilité dudit premier appareil 1 à l'aide dudit moyen de commande, ladite information désignant ledit premier appareil 1 comme comprenant ladite clé de chiffrement publique à laquelle est associée ladite clé de chiffrement privée, ladite information désignant ladite clé de chiffrement privée comme n'étant pas contenue dans ladite base de données à distance sécurisée (figure 1) ou dans ladite base de données locale sécurisée (figure 2), ladite information désignant en outre ledit premier appareil 1 comme étant autorisé à communiquer avec ladite centrale domotique 3 ou, par l'intermédiaire de ladite centrale domotique 3, avec ledit au moins un deuxième appareil 2 dudit réseau domotique 2' par le biais d'une communication sécurisée 5, cette étape est réalisée à l'aide dudit premier moyen de mémoire.

Selon ce quatrième mode particulier de l'invention, ladite clé de chiffrement n'est ni contenue dans la base de donnée à distance, ni contenue dans la base de donnée locale.

Selon une variante du quatrième mode particulier de l'invention, ladite information peut être associée à un certificat numérique, préférentiellement un certificat numérique de type X 509.

Selon une autre variante du quatrième mode particulier de l'invention, ladite information peut être associée à une adresse de type Media Access Control (MAC) dudit premier appareil 1.

Selon un cinquième mode particulier de l'invention, le procédé comprend en outre, à la suite de l'étape de vérification (c) et dans le cas où ledit premier appareil 1 n'émet pas à travers ledit premier réseau 1' ladite clé de chiffrement publique :
- une étape d'enregistrement (f") d'une information uniquement lorsque dans l'étape de vérification (c) aucune clé de chiffrement publique n'est émise du au moins un premier appareil 1 et qu'un utilisateur confirme manuellement la fiabilité dudit premier appareil 1 à l'aide dudit moyen de commande, ladite information désignant ledit premier appareil 1 comme ne comprenant pas ladite clé de chiffrement publique à laquelle est associée ladite clé de chiffrement privée, ladite information désignant en outre ledit premier appareil 1 comme étant autorisé à communiquer avec ladite centrale domotique 3 ou, par l'intermédiaire de ladite centrale domotique 3, avec ledit au moins un deuxième appareil 2 dudit réseau domotique 2' par le biais d'une communication non sécurisée, cette étape est réalisée à l'aide dudit premier moyen de mémoire.

Selon une variante du cinquième mode particulier de l'invention, ladite information peut être associée à un certificat numérique, préférentiellement un certificat numérique de type X 509.

Selon une autre variante du cinquième mode particulier de l'invention, ladite information peut être associée à une adresse de type Media Access Control (MAC) dudit premier appareil 1.

Grâce aux informations et/ou aux certificats numériques, il est possible pour l'utilisateur de gérer des listes de révocation selon la fiabilité du premier appareil 1.

Selon un troisième mode particulier de l'étape de découverte (a), cette étape consiste en :
- une étape de découverte (a) par ladite centrale domotique 3 dudit au moins un premier appareil 1 dudit premier réseau 1', cette étape étant réalisée à l'aide d'un moyen de commande de ladite centrale domotique 3, ledit premier réseau 1' étant un réseau de type IPv4.

Selon un sixième mode particulier de l'invention, le procédé comprend en outre :
- une étape d'autorisation (g) automatique d'une communication bidirectionnelle sécurisée dudit au moins un premier appareil 1 avec ladite centrale domotique 3 ou, par l'intermédiaire de ladite centrale domotique 3, avec ledit au moins un deuxième appareil 2 dudit réseau domotique 2', uniquement lorsque ladite information est enregistrée dans ledit premier moyen de mémoire, cette étape est réalisée à partir de ladite centrale domotique 3.

Grâce à cette étape d'autorisation, il est possible d'autoriser automatiquement toute nouvelle communication entrante ou sortante depuis ladite centrale domotique 3 lorsqu'un premier appareil 1 a été autorisé à communiquer de façon sécurisée avec ladite centrale domotique 3 ou, par l'intermédiaire de ladite centrale domotique 3, avec ledit deuxième appareil 2 appartenant audit deuxième réseau domotique 2'. Ainsi, les communications dudit premier appareil 1 avec ladite centrale domotique 3 ou, par l'intermédiaire de ladite centrale domotique 3, avec ledit deuxième appareil 2 ne seront plus ignorées par la centrale domotique 3.

Selon un septième mode particulier de l'invention, le procédé comprend en outre :
- une étape d'autorisation (g') automatique d'une communication bidirectionnelle non sécurisée dudit au moins un premier appareil 1 avec ladite centrale domotique 3 ou, par l'intermédiaire de ladite centrale domotique 3, avec ledit au moins un deuxième appareil 2 dudit réseau domotique 2', uniquement lorsque ladite information est enregistrée dans ledit premier moyen de mémoire, cette étape est réalisée à partir de ladite centrale domotique 3.

Grâce à cette étape d'autorisation, il est possible d'autoriser toute nouvelle communication entrante ou sortante depuis ladite centrale domotique 3 lorsqu'un premier appareil 1 a été autorisé à communiquer de façon non sécurisée avec ladite centrale domotique 3 ou, par l'intermédiaire de ladite centrale domotique 3, avec ledit deuxième appareil 2 appartenant audit deuxième réseau domotique 2'. Ainsi, les communications dudit premier appareil 1 avec ladite centrale domotique 3 ou, par l'intermédiaire de ladite centrale domotique 3, avec ledit deuxième appareil 2 ne seront plus ignorées par la centrale domotique 3.

Selon un huitième mode particulier de l'invention, le procédé comprend en outre à la suite de l'une quelconque des étapes d'autorisations (g) ou (g') :
- une étape de conversion (h) d'un signal de données reçu depuis ledit au moins un premier appareil 1 en un signal de données apte à être transmis sur ledit réseau domotique 2', ledit réseau domotique 2' étant, de préférence, un réseau KNX, cette étape est réalisée à l'aide d'un moyen de routage de ladite centrale domotique 3.

De façon non limitative, ledit réseau domotique 2' peut être un réseau de type ZigBee ou Z-Wave ou EnOcean ou WIFI ou RFID ou Bluetooth ou NFC ou RS485 ou ModBus ou Profibus ou Ethernet ou X10.

L'invention porte également sur une centrale domotique 3 pour la mise en oeuvre du procédé, ladite centrale domotique 3 étant configurée pour réaliser une communication bidirectionnelle d'au moins un premier appareil 1 appartenant à un premier réseau 1' avec une centrale domotique 3 et/ou, par l'intermédiaire de ladite centrale domotique 3, avec au moins un deuxième appareil 2 appartenant à un deuxième réseau 2', ledit deuxième réseau 2' étant un réseau domotique,
caractérisée en ce qu'elle comprend :
- un moyen de contrôle apte à réaliser les étapes de détection (b), de vérification (c), de réception (d), d'établissement (e), d'autorisations (g) et (g'),
- un moyen de commande apte à réaliser l'étape de découverte (a),
- un système de connexion apte à relier ledit premier appareil 1 à ladite centrale domotique 3.

Selon un premier mode préféré, le moyen de routage est apte à réaliser une étape de conversion d'un signal de données reçu depuis ledit au moins un premier appareil 1 en un signal de données apte à être transmis sur ledit réseau domotique 2', cette étape est réalisée à l'aide d'un moyen de routage de ladite centrale domotique 3.

Selon un deuxième mode préféré, la centrale domotique 3 comprend en outre un moyen de routage apte à réaliser l'étape de conversion (h).

Selon un troisième mode préféré, ledit système de connexion comprend au moins un moyen de connexion de type IPv4.

Selon un quatrième mode préféré, ledit système de connexion comprend au moins un moyen de connexion de type KNX.

Selon un cinquième mode préféré, la centrale domotique 3 comprend en outre un processeur en vue de réaliser au moins l'une des étapes selon l'un quelconque des modes particuliers de l'invention.

Selon un sixième mode préféré, la centrale domotique 3 comprend en outre un premier et/ou deuxième moyen de mémoire apte à stocker ladite base de données locale sécurisée (figure 2) et/ou à enregistrer les informations telles que définies dans les étapes d'enregistrements (f), (f') et (f").

Bien entendu, l'invention n'est pas limitée aux modes de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Procédé d'initialisation et de sécurisation de communication bidirectionnelle d'au moins un premier appareil (1) appartenant à un premier réseau (1') avec une centrale domotique (3) ou, par l'intermédiaire de ladite centrale domotique (3), avec au moins un deuxième appareil (2) appartenant à un deuxième réseau (2'), ledit deuxième réseau (2') étant un réseau domotique, ladite centrale domotique (3) étant reliée, d'une part audit premier réseau (1'), et d'autre part audit deuxième réseau (2'), procédé comprenant :
- une étape de détection (b) automatique dudit au moins un premier appareil (1), cette étape étant réalisée à partir de ladite centrale domotique (3) ;
- une étape de vérification (c) automatique pour déterminer si ledit premier appareil (1) émet à travers ledit premier réseau (1') une clé de chiffrement publique à laquelle est associée une clé de chiffrement privée, cette étape étant réalisée à partir de ladite centrale domotique (3) ;
procédé **caractérisé en ce qu'**il comprend :
- une étape de découverte (a) par ladite centrale domotique (3) dudit au moins un premier appareil (1) dudit premier réseau (1'), cette étape étant réalisée à l'aide d'un moyen de commande de ladite centrale domotique (3), ladite centrale domotique (3) étant configurée pour, initialement, ignorer les communications provenant et/ou à destination dudit au moins un premier appareil (1) dudit premier réseau (1').

2. Procédé selon la revendication 1, **caractérisé en ce qu'**il comprend en outre, à la suite de l'étape de vérification (c) et dans le cas où ledit premier appareil (1) émet à travers ledit premier réseau (1') ladite clé de chiffrement publique :
- une étape de réception (d) de ladite clé de chiffrement publique provenant du au moins premier appareil (1).

3. Procédé selon l'un quelconque des revendications 1 ou 2, **caractérisé en ce que** l'étape de découverte (a) est réalisée en appuyant manuellement sur un moyen de commande mécanique de ladite centrale domotique (3).

4. Procédé selon l'un quelconque des revendications 1 ou 2, **caractérisé en ce que** l'étape de découverte (a) est réalisée en générant manuellement une requête à partir d'une interface informatique d'utilisation et de gestion de ladite centrale domotique (3).

5. Procédé selon la revendication 2, **caractérisé en ce qu'**il comprend en outre, à la suite de l'étape réception (d) :
- une étape d'établissement (e) d'un lien de communication entre ladite centrale domotique (3) et une base de données à distance sécurisée ou une base de données locale sécurisée puis d'envoi d'une requête contenant ladite clé de chiffrement publique à ladite base de données à distance sécurisée ou à ladite base de données locale sécurisée, cette étape est réalisée à partir de ladite centrale domotique (3) en vue de déterminer si ladite clé de chiffrement privée est comprise dans ladite base de données à distance sécurisée ou dans ladite base de données locale sécurisée, ladite centrale domotique (3) comprenant en outre un premier moyen de mémoire.

6. Procédé selon la revendication 5, **caractérisé en ce que** ladite base de données locale sécurisée est stockée dans un deuxième moyen de mémoire de ladite centrale domotique (3).

7. Procédé selon l'une quelconque des revendications 5 à 6, **caractérisé en ce qu'**il comprend en outre, à la suite de l'étape d'établissement (e) :
- une étape d'enregistrement (f) automatique d'une information uniquement lorsque ladite clé de chiffrement privée est contenue dans ladite base de données à distance sécurisée ou dans ladite base de données locale sécurisée, ladite information désignant ledit premier appareil (1) comme comprenant ladite clé de chiffrement publique à laquelle est associée ladite clé de chiffrement privée, ladite information désignant ladite clé de chiffrement privée comme étant contenue dans ladite base de données à distance sécurisée ou dans ladite base de données locale sécurisée, ladite information désignant en outre ledit premier appareil 1 comme étant autorisé à communiquer avec ladite centrale domotique (3) ou, par l'intermédiaire de ladite centrale domotique (3), avec ledit au moins un deuxième appareil (2) dudit réseau domotique (2') par le biais d'une communication sécurisée (5), cette étape est réalisée à l'aide dudit premier moyen de mémoire.

8. Procédé selon l'une quelconque des revendications 5 à 7, **caractérisé en ce qu'**il comprend en outre, à la suite de l'étape d'établissement (e) :
- une étape d'enregistrement (f') d'une information uniquement lorsque ladite clé de chiffrement privée n'est pas contenue dans ladite base de données à distance sécurisée ou dans ladite base de données locale sécurisée et qu'un utilisateur confirme manuellement la fiabilité dudit premier appareil (1) à l'aide dudit moyen de commande, ladite information désignant ledit premier appareil (1) comme comprenant ladite clé de chiffrement publique à laquelle est associée ladite clé de chiffrement privée, ladite information désignant ladite clé de chiffrement privée comme n'étant pas contenue dans ladite base de données à distance sécurisée ou dans ladite base de données locale sécurisée, ladite information désignant en outre ledit premier appareil 1 comme étant autorisé à communiquer avec ladite centrale domotique (3) ou, par l'intermédiaire de ladite centrale domotique (3), avec ledit au moins un deuxième appareil (2) dudit réseau domotique (2') par le biais d'une communication sécurisée (5), cette étape est réalisée à l'aide dudit premier moyen de mémoire.

9. Procédé selon l'une quelconque des revendications précédentes, **caractérisé en ce qu'**il comprend en outre, à la suite de l'étape de vérification (c) et dans le cas où ledit premier appareil (1) n'émet pas à travers ledit premier réseau (1') ladite clé de chiffrement publique :
- une étape d'enregistrement (f") d'une information uniquement lorsque dans l'étape de vérification (c) aucune clé de chiffrement publique n'est émise du au moins un premier appareil (1) et qu'un utilisateur confirme manuellement la fiabilité dudit premier appareil (1) à l'aide dudit moyen de commande, ladite information désignant ledit premier appareil (1) comme étant autorisé à communiquer avec ladite centrale domotique (3) ou, par l'intermédiaire de ladite centrale domotique (3), avec ledit au moins un deuxième appareil (2) dudit réseau domotique (2') par le biais d'une communication non sécurisée, cette étape est réalisée à l'aide dudit premier moyen de mémoire.

10. Procédé selon l'une quelconque des revendications précédentes, **caractérisé en ce que**, l'étape de découverte (a) consiste en :
- une étape de découverte (a) par ladite centrale domotique (3) dudit au moins un premier appareil (1) dudit premier réseau (1'), cette étape étant réalisée à l'aide d'un moyen de commande de ladite centrale domotique (3), ledit premier réseau (1') étant un réseau de type IPv4.

11. Procédé selon l'une quelconque des revendications 7 ou 8, **caractérisé en ce qu'**il comprend en outre :
- une étape d'autorisation (g) automatique d'une communication bidirectionnelle sécurisée dudit au moins un premier appareil (1) avec ladite centrale domotique (3) ou, par l'intermédiaire de ladite centrale domotique (3), avec ledit au moins un deuxième appareil (2) dudit réseau domotique (2'), uniquement lorsque ladite information est enregistrée dans ledit premier moyen de mémoire, cette étape est réalisée à partir de ladite centrale domotique (3).

12. Procédé selon la revendication 9, **caractérisé en ce qu'**il comprend en outre :
- une étape d'autorisation (g') automatique d'une communication bidirectionnelle non sécurisée dudit au moins un premier appareil (1) avec ladite centrale domotique (3) ou, par l'intermédiaire de ladite centrale domotique (3), avec ledit au moins un deuxième appareil (2) dudit réseau domotique (2'), uniquement lorsque ladite information est enregistrée dans ledit premier moyen de mémoire, cette étape est réalisée à partir de ladite centrale domotique (3).

13. Procédé selon l'un quelconque des revendications 11 ou 12, **caractérisé en ce qu'**il comprend en outre à la suite de l'une quelconque des étapes d'autorisations (g) ou (g') :
- une étape de conversion (h) d'un signal de données reçu depuis ledit au moins un premier appareil (1) en un signal de données apte à être transmis sur ledit réseau domotique (2'), ledit réseau domotique (2') étant un réseau KNX, cette étape est réalisée à l'aide d'un moyen de routage de ladite centrale domotique (3).

14. Centrale domotique (3) pour mettre en oeuvre du procédé selon l'une quelconque des revendications précédentes, ladite centrale domotique (3) étant configurée pour réaliser une communication bidirectionnelle d'au moins un premier appareil (1) appartenant à un premier réseau (1') avec une centrale domotique (3) et/ou, par l'intermédiaire de ladite centrale domotique (3), avec au moins un deuxième appareil (2) appartenant à un deuxième réseau (2'), ledit deuxième réseau (2') étant un réseau domotique,
ladite centrale domotique (3) comprenant :
- un moyen de contrôle apte à réaliser les étapes de détection (b) et de vérification (c) telles que définies selon la revendication 1, l'étape de réception (d) telle que définie selon la revendication 2, l'étape de d'établissement (e) telle que définie selon la revendication 5, les étapes d'autorisations (g) et (g') telles que définies selon les revendications 11 ou 12,
- un système de connexion apte à relier ledit premier appareil (1) à ladite centrale domotique (3),
ladite centrale domotique (3) **caractérisée en ce qu'**elle comprend :
- un moyen de commande apte à réaliser l'étape de découverte (a) telle que définie selon l'une quelconque des revendications 1, 3, 4 et 10.

15. Centrale domotique (3) selon la revendication 14, **caractérisée en ce qu'**elle comprend en outre un moyen de routage apte à réaliser l'étape de conversion (h) telle que définie selon la revendication 13.

16. Centrale domotique (3) selon l'une quelconque des revendications 14 ou 15, **caractérisée en ce que** ledit système de connexion comprend au moins un moyen de connexion de type IPv4.

17. Centrale domotique (3) selon l'une quelconque des revendications 14 à 16, **caractérisée en ce que** ledit système de connexion comprend au moins moyen de connexion de type KNX.

18. Centrale domotique (3) selon l'une quelconque des revendications 14 à 17, **caractérisée en ce qu'**elle comprend en outre un premier et/ou deuxième moyen de mémoire apte à stocker ladite base de données locale sécurisée et/ou à enregistrer les informations telles que définies selon les revendications 7, 8 et 9 respectivement.

## Patentansprüche

1. Verfahren zum Initialisieren und Sichern der bidirektionalen Kommunikation mindestens einer ersten Vorrichtung (1), die zu einem ersten Netzwerk (I') gehört, mit einer Haustechnikzentrale (3) oder über die Haustechnikzentrale (3), mit mindestens einer zweiten Vorrichtung (2), die zu einem zweiten Netzwerk (2') gehört, wobei das zweite Netzwerk (2') ein Haustechniknetzwerk ist, wobei die Haustechnikzentrale (3) einerseits mit dem ersten Netzwerk (1') und andererseits mit dem zweiten Netzwerk (2') verbunden ist, wobei das Verfahren umfasst:
- einen automatischen Detektionsschritt (b) der mindestens einen ersten Vorrichtung (1), wobei dieser Schritt von der Haustechnikzentrale (3) aus durchgeführt wird;
- einen automatischen Verifizierungsschritt (c), um zu bestimmen, ob die erste Vorrichtung (1) über das erste Netzwerk (1') einen öffentlichen Verschlüsselungscode überträgt, dem ein privater Verschlüsselungscode zugeordnet ist, wobei dieser Schritt von der Haustechnikzentrale (3) aus ausgeführt wird; wobei das Verfahren **dadurch gekennzeichnet ist, dass** es beinhaltet:
- einen Erkennungsschritt (a) der mindestens einen ersten Vorrichtung (1) des ersten Netzwerks (1') durch die Haustechnikzentrale (3), wobei dieser Schritt unter Verwendung eines Steuermittels der Haustechnikzentrale (3) durchgeführt wird, wobei die Haustechnikzentrale (3) konfiguriert ist, um zunächst die Kommunikationen von und/oder zu der mindestens einen ersten Vorrichtung (1) des ersten Netzwerks (1') zu ignorieren.

2. Verfahren nach Anspruch 1, **dadurch gekennzeichnet, dass** es ferner umfasst, nach dem Verifizierungsschritt (c) und für den Fall, dass die erste Vorrichtung (1) den öffentlichen Verschlüsselungscode über das erste Netzwerk (1') sendet:
- einen Empfangsschritt (d) des öffentlichen Verschlüsselungscodes, stammend von der mindestens ersten Vorrichtung (1).

3. Verfahren nach einem der Ansprüche 1 oder 2, **dadurch gekennzeichnet, dass** der Erkennungsschritt (a) durch manuelles Drücken eines mechanischen Steuermittels der Haustechnikzentrale (3) durchgeführt wird.

4. Verfahren nach einem der Ansprüche 1 oder 2, **dadurch gekennzeichnet, dass** der Erkennungsschritt (a) durchgeführt wird durch manuelles Erzeugen einer Anforderung von einer Computerschnittstelle für die Verwendung und Verwaltung der Haustechnikzentrale (3).

5. Verfahren nach Anspruch 2, **dadurch gekennzeichnet, dass** es ferner, nach dem Empfangsschritt (d), umfasst:
- einen Herstellungsschritt (e) einer Kommunikationsverbindung zwischen der Haustechnikzentrale (3) und einer sicheren entfernten Datenbank oder einer sicheren lokalen Datenbank zum anschließenden Senden einer Anforderung, die den öffentlichen Verschlüsselungscode enthält, an die sichere entfernte Datenbank oder die sichere lokale Datenbank, wobei dieser Schritt ausgehend von der Haustechnikzentrale (3) durchgeführt wird, um zu bestimmen, ob der private Verschlüsselungscode in der sicheren entfernten Datenbank oder in der sicheren lokalen Datenbank enthalten ist, wobei die Haustechnikzentrale (3) ferner ein erstes Speichermittel umfasst.

6. Verfahren nach Anspruch 5, **dadurch gekennzeichnet, dass** die sichere lokale Datenbank in einem zweiten Speichermittel der Haustechnikzentrale (3) gespeichert wird.

7. Verfahren nach einem der Ansprüche 5 bis 6, **dadurch gekennzeichnet, dass** es ferner, nach dem Herstellungsschritt (e), umfasst:
- einen automatischen Aufzeichnungsschritt (f) einer Information nur dann, wenn der private Verschlüsselungscode in der sicheren entfernten Datenbank oder in der sicheren lokalen Datenbank enthalten ist, wobei die Information die erste Vorrichtung (1) als den öffentlichen Verschlüsselungscode, der dem privaten Verschlüsselungscode zugeordnet ist, aufweisend bezeichnet, wobei die Information den privaten Verschlüsselungscode als in der sicheren entfernten Datenbank oder in der sicheren lokalen Datenbank enthaltend bezeichnet, wobei die Information ferner die erste Vorrichtung (1) als autorisiert bezeichnet, mit der oder über die Haustechnikzentrale (3) mit der mindestens einen zweiten Vorrichtung (2) des Haustechniknetzwerkes (2') über eine sichere Kommunikation (5) zu kommunizieren, wobei dieser Schritt unter Verwendung der ersten Speichermittel ausgeführt wird.

8. Verfahren nach einem der Ansprüche 5 bis 7, **dadurch gekennzeichnet, dass** es ferner, nach dem Herstellungsschritt (e), umfasst:
- einen Aufzeichnungsschritt von (f') einer Information nur dann, wenn der private Verschlüsselungscode nicht in der sicheren entfernten Datenbank oder der sicheren lokalen Datenbank enthalten ist und ein Benutzer die Vertrauenswürdigkeit der ersten Vorrichtung (1) unter Verwendung des Steuermittels manuell bestätigt, wobei die Information die erste Vorrichtung (1) so kennzeichnet, dass sie den öffentlichen Verschlüsselungscode beinhaltet, dem der private Verschlüsselungscode zugeordnet ist, wobei die Information den privaten Verschlüsselungscode als nicht in der sicheren entfernten Datenbank oder in der sicheren lokalen Datenbank enthaltend kennzeichnet, wobei die Information die erste Vorrichtung (1) ferner als autorisiert bezeichnet, mit der oder über die Haustechnikzentrale (3) mit der mindestens einen zweiten Vorrichtung (2) des Haustechniknetzwerks (2') über eine sichere Kommunikation (5) zu kommunizieren, wobei dieser Schritt unter Verwendung des ersten Speichermittels ausgeführt wird.

9. Verfahren nach einem der vorgenannten Ansprüche, **dadurch gekennzeichnet, dass** es ferner, nach dem Verifizierungsschritt (c) und für den Fall, dass die erste Vorrichtung (1) nicht über das erste Netzwerk (1') den öffentlichen Verschlüsselungscode sendet, umfasst:
- einen Aufzeichnungsschritt (f") einer Information nur dann, wenn in dem Verifizierungsschritt (c) kein öffentlicher Verschlüsselungscode von der mindestens einen ersten Vorrichtung (1) ausgegeben wird und ein Benutzer die Vertrauenswürdigkeit der ersten Vorrichtung (1) unter Verwendung des Steuermittels manuell bestätigt, wobei die Information die erste Vorrichtung (1) als berechtigt zur Kommunikation mit der oder über die Haustechnikzentrale (3) mit der mindestens einen zweiten Vorrichtung (2) des Haustechniknetzwerkes (2') durch eine ungesicherte Kommunikation bezeichnet, wobei dieser Schritt unter Verwendung des ersten Speichermittels ausgeführt wird.

10. Verfahren nach einem der obigen Ansprüche, **dadurch gekennzeichnet, dass** der Erkennungsschritt (a) besteht aus:
- einem Erkennungsschritt (a) der mindestens einen ersten Vorrichtung (1) des ersten Netzwerks (I') durch die Haustechnikzentrale (3), wobei dieser Schritt unter Verwendung eines Steuermittels der Haustechnikzentrale (3) durchgeführt wird, wobei das erste Netzwerk (I') ein Netzwerk vom Typ IPv4 ist.

11. Verfahren nach einem der Ansprüche 7 oder 8, **dadurch gekennzeichnet, dass** es ferner umfasst:
- einen automatischen Autorisierungsschritt (g) einer sicheren bidirektionalen Kommunikation der mindestens einen ersten Vorrichtung (1) mit der oder über die Haustechnikzentrale (3) mit der mindestens einen zweiten Vorrichtung (2) des Haustechniknetzwerkes (2'), wobei nur wenn die Information im ersten Speichermittel aufgezeichnet ist, wobei dieser Schritt von der Haustechnikzentrale (3) aus durchgeführt wird.

12. Verfahren nach Anspruch 9, **dadurch gekennzeichnet, dass** es ferner umfasst:
- einen automatischen Autorisierungsschritt (g') für eine ungesicherte bidirektionale Kommunikation der mindestens einen ersten Vorrichtung (1) mit der oder über die Haustechnikzentrale (3) mit der mindestens einen zweiten Vorrichtung (2) des Haustechniknetzwerkes (2'), wobei nur wenn die Informationen im ersten Speichermittel aufgezeichnet sind, dieser Schritt von der Haustechnikzentrale (3) aus durchgeführt wird.

13. Verfahren nach einem der Ansprüche 11 oder 12, **dadurch gekennzeichnet, dass** es ferner nachfolgend zu einem der Autorisierungsschritte (g) oder (g') umfasst:
- einen Umwandlungsschritt (h) eines von der mindestens einen ersten Vorrichtung (1) empfangenen Datensignals in ein Datensignal, das auf dem Haustechniknetzwerk (2') übertragen werden kann, wobei das Haustechniknetzwerk (2') ein KNX-Netzwerk ist, wobei dieser Schritt unter Verwendung eines Routingmittels der Haustechnikzentrale (3) ausgeführt wird.

14. Haustechnikzentrale (3) zur Durchführung des Verfahrens nach einem der vorhergehenden Ansprüche, wobei die Haustechnikzentrale (3) konfiguriert ist, um eine bidirektionale Kommunikation mindestens einer ersten zu einem ersten Netzwerk (I') gehörenden ersten Vorrichtung (1) mit einer oder über eine Haustechnikzentrale (3) mit mindestens einer zu einem zweiten Netzwerk (2') gehörenden zweiten Vorrichtung (2) durchzuführen, wobei das zweite Netzwerk (2') ein Haustechniknetzwerk ist, wobei die Haustechnikzentrale (3) umfasst:
- ein Steuermittel, das in der Lage ist, die Schritte zum Detektieren (b) und Verifizieren (c) nach Anspruch 1, den Empfangsschritt (d) nach Anspruch 2, den Herstellungsschritt (e) nach Anspruch 5 und die Autorisierungsschritte(g) und (g') nach einem der Ansprüche 11 oder 12 auszuführen,
- ein Verbindungssystem, das in der Lage ist, die erste Vorrichtung (1) mit der Haustechnikzentrale (3) zu verbinden, wobei die Haustechnikzentrale (3) **dadurch gekennzeichnet ist, dass** sie umfasst:
- ein Steuermittel, das in der Lage ist, den Erkennungsschritt (a) gemäß einem der Ansprüche 1, 3, 4 und 10 durchzuführen.

15. Haustechnikzentrale (3) nach Anspruch 14, **dadurch gekennzeichnet, dass** sie ferner ein Routingmittel umfasst, das in der Lage ist, den Umwandlungsschritt (h) gemäß der Definition nach Anspruch 13 durchzuführen.

16. Haustechnikzentrale (3) nach einem der Ansprüche 14 oder 15, **dadurch gekennzeichnet, dass** das Verbindungssystem mindestens ein Verbindungsmittel vom Typ IPv4 umfasst.

17. Haustechnikzentrale (3) nach einem der Ansprüche 14 bis 16, **dadurch gekennzeichnet, dass** das Verbindungssystem mindestens ein Verbindungsmittel vom Typ KNX umfasst.

18. Haustechnikzentrale (3) nach einem der Ansprüche 14 bis 17, **dadurch gekennzeichnet, dass** es ferner erste und/oder zweite Speichermittel umfasst, die in der Lage sind, die sichere lokale Datenbank zu speichern und/oder die Informationen aufzuzeichnen, wie sie jeweils in den Ansprüchen 7, 8 und 9 definiert sind.

## Claims

1. A method for initializing and securing bidirectional communication of at least one first device (1) belonging to a first network (1') with a home-automation hub (3) or, via the said home-automation hub (3), with at least a second device (2) belonging to a second network (2'), the said second network (2') being a home-automation network, the said home-automation hub (3) being connected, on the one hand, to the said first network (1') and, on the other hand, to the said second network (2'), the method including:
- a step for automatic detection (b) of the said at least one first device (1), this step being carried out from the said home-automation hub (3);
- an automatic verification step (c) for determining whether the said first device (1) is emitting, over the said first network (1'), a public encryption key with which a private encryption key is associated, this step being carried out from the said home-automation hub (3);
the method **characterized in that** it includes:
- a discovery step (a) by the said home-automation hub (3) of the said at least one first device (1) of the said first network (1'), this step being carried out with the aid of a control means of the said home-automation hub (3), the said home-automation hub (3) being configured for, initially, ignoring the communications originating from and/or destined for the said at least first device (1) of the said first network (1').

2. The method according to Claim 1, **characterized in that** it further includes, following the verification step (c) and in the case where the said first device (1) is emitting the said public encryption key over the said first network (1'):
- a step (d) for receiving the said public encryption key originating from the at least one first device (1).

3. The method according to any one of Claims 1 or 2, **characterized in that** the discovery step (a) is carried out by manually pushing on a mechanical control means of the said home-automation hub (3).

4. The method according to any one of Claims 1 or 2, **characterized in that** the discovery step (a) is carried out by manually generating a request from a computer interface for use and management of the said home-automation hub (3).

5. The method according to Claim 2, **characterized in that** it further includes, following the reception step (d):
- a step for establishment (e) of a communication link between the said home-automation hub (3) and a secure remote database or a secure local database, then for sending a request containing the said public encryption key to the said secure remote database or to the said secure local database, this step being carried out from the said home-automation hub (3) with a view to determining whether the said private encryption key is included within the said secure remote database or within the said secure local database, the said home-automation hub (3) further including a first memory means.

6. The method according to Claim 5, **characterized in that** the said secure local database is stored in a second memory means of the said home-automation hub (3).

7. The method according to any one of Claims 5 to 6, **characterized in that** it further includes, following the establishment step (e):
- an automatic step (f) for recording information only when the said private encryption key is contained within the said secure remote database or within the said secure local database, the said information designating the said first device (1) as including the said public encryption key with which the said private encryption key is associated, the said information designating the said private encryption key as being contained within the said secure remote database or within the said secure local database, the said information further designating the said first device (1) as being authorized to communicate with the said home-automation hub (3) or, via the said home-automation hub (3), with the said at least one second device (2) of the said home-automation network (2') via a secure communication (5), this step being carried out with the aid of the said first memory means.

8. The method according to any one of Claims 5 to 7, **characterized in that** it further includes, following the establishment step (e):
- a step (f') for recording information only when the said private encryption key is not contained within the said secure remote database or within the said secure local database and when a user manually confirms the reliability of the said first device (1) with the aid of the said control means, the said information designating the said first device (1) as including the said public encryption key with which the said private encryption key is associated, the said information designating the said private encryption key as not being contained within the said secure remote database or within the said secure local database, the said information further designating the said first device (1) as being authorized to communicate with the said home-automation hub (3) or, via the said home-automation hub (3), with the said at least one second device (2) of the said home-automation network (2') via a secure communication (5), this step being carried out with the aid of the said first memory means.

9. The method according to any one of the preceding claims, **characterized in that** it further includes, following the verification step (c) and in the case where the said first device (1) does not emit the said public encryption key over the said first network (1'):
- a step (f'') for recording information only when in the verification step (c) no public encryption key is being emitted from the at least one first device (1) and when a user manually confirms the reliability of the said first appliance (1) with the aid of the said control means, the said information designating the said first device (1) as being authorized to communicate with the said home-automation hub (3) or, via the said home-automation hub (3), with the said at least one second device (2) of the said home-automation network (2') via a non-secure communication, this step being carried out with the aid of the said first memory means.

10. The method according to any one of the preceding claims, **characterized in that** the discovery step (a) consists of:
- a discovery step (a) by the said home-automation hub (3) of the said at least first device (1) of the said first network (1'), this step being carried out with the aid of a control means of the said home-automation hub (3), the said first network (1') being a network of the IPv4 type.

11. The method according to any one of Claims 7 or 8, **characterized in that** it further includes:
- a step (g) for automatic authorization of a secure bidirectional communication of the said at least one first device (1) with the said home-automation hub (3) or, via the said home-automation hub (3), with the said at least one second device (2) of the said home-automation network (2'), only when the said information is recorded in the said first memory means, this step being carried out from the said home-automation hub (3).

12. The method according to Claim 9, **characterized in that** it further includes:
- a step (g') for automatic authorization of a non-secure bidirectional communication of the said at least one first device (1) with the said home-automation hub (3) or, via the said home-automation hub (3), with the said at least one second device (2) of the said home-automation network (2'), only when the said information is recorded in the said first memory means, this step being carried out from the said home-automation hub (3).

13. The method according to any one of Claims 11 or 12, **characterized in that** it further includes, following any one of the authorization steps (g) or (g'):
- a step (h) for conversion of a data signal received from the said at least one first device (1) into a data signal able to be transmitted over the said home-automation network (2'), the said home-automation network (2') being a KNX network, this step being carried out with the aid of a routing means of the said home-automation hub (3).

14. A home-automation hub (3) for implementing the method according to any one of the preceding claims, the said home-automation hub (3) being configured for carrying out a bidirectional communication of at least one first device (1) belonging to a first network (1') with a home-automation hub (3) and/or, via the said home-automation hub (3), with at least one second device (2) belonging to a second network (2'), the said second network (2') being a home-automation network, said home-automation hub (3) including:
- a monitoring means able to carry out the detection (b) and verification (c) steps as defined according to Claim 1, the reception step (d) as defined according to Claim 2, the establishment step (e) as defined according to Claim 5, the authorization steps (g) and (g') as defined according to Claims 11 or 12,
- a connection system able to connect the said first device (1) to the said home-automation hub (3), the said home-automation hub (3) **characterized in that** it includes:
- a control means able to carry out the discovery step (a) as defined according to any one of Claims 1, 3, 4 and 10.

15. The home-automation hub (3) according to Claim 14, **characterized in that** it further includes a routing means able to carry out the conversion step (h) as defined according to Claim 13.

16. The home-automation hub (3) according to any one of Claims 14 or 15, **characterized in that** the said connection system includes at least one connection means of the IPv4 type.

17. The home-automation hub (3) according to any one of Claims 14 to 16, **characterized in that** the said connection system includes at least connection means of the KNX type.

18. The home-automation hub (3) according to any one of Claims 14 to 17, **characterized in that** it further includes a first and/or second memory means able to store the said secure local database and/or to record the information as defined according to Claims 7, 8 and 9, respectively.
